# EUROPEAN PATENT APPLICATION

(11) **EP 2 868 897 A1**
(43) Date of publication of application: **06.05.2015**
(21) Application number: 13191254.5
(22) Date of filing: 01.11.2013
(51) Int. Cl.: F02C 7/18

(54) **Method and system for sequential cooling of gas turbine components**

(71) Applicant: ALSTOM Technology Ltd, 5400 Baden (CH)
(72) Inventor: Zagorskiy, Alexander, 5430 Wettingen (CH); Rofka, Stefan, 5415 Nussbaumen (CH); Reiter, Wilhelm, 79790 Kuessaberg (DE); Marmilic, Robert, 5415 Rieden (CH)

(57) **Abstract**

The present invention relates to a sequential cooling method for a gas turbine system, wherein the gas turbine system comprises a compressor for compressing air, a combustor in which a fuel is burned with the compressed air from the compressor to form hot gas, a turbine comprising a plurality of stages having a first stage and a second stage, the method comprises steps of: cooling the first stage of the turbine through a cooling air flow, whereby a first discharged air is formed; re-cooling the first discharged air flow, whereby a first re-cooled air flow is formed; cooling the second stage of the turbine through the first re-cooled air flow, whereby a second discharged air flow is formed. The invention also relates to gas turbine system for sequential cooling. With this invention, the cooling efficiency in the gas turbine is further improved.

## Description

### Technical Field

The present invention relates to a gas turbine, and more particularly to a method for sequential cooling the gas turbine components as well as a gas turbine system for sequential cooling.

### Background of the Invention

A gas turbine engine includes a compressor for compressing air which is suitably mixed with fuel and ignited for generating combustion gases in a combustor disposed in flow communication with a turbine which extracts energy therefrom for powering the compressor and producing output power such as that used for powering an electrical generator. The turbine includes one or more stages of vanes, rotor blades, and annular shrouds around the turbine blades for maintaining suitably tight clearances therewith.

The components such as turbine vanes, blades, and shrouds are heated by the hot combustion gases and are typically cooled during operation to ensure a useful life thereof. The cooling can be achieved either by using closed cooling circuits supplied from an external cooling medium source like water or steam, or by bleeding a portion of the compressed air from the compressor and suitably channeling it through various conventional local circuits in these components for providing cooling thereof. The advantage of the latter, i.e., using compressed air from compressor as cooling media, is a more simplified cooling system compared to using an external cooling system which may increase the level of complexity as well as cost and safety risk. In the compressed air cooling way, the cooling air is introduced into the turbine components such as vanes or blades to be cooled, and after absorbing the heat therefrom it is discharged into the hot gas path through the film cooling. However, in this open circuit air cooling system, as the cooling air after absorbing the heat does not return back to the compressor, the efficiency of the compressor is adversely affected.

A gas turbine with a closed cooling system for the stator blades and rotor blades and also for the hot gas casing of the turbine has been proposed in U.S. Pat. No. 5,611,197, in which air at a specified pressure is extracted from the compressor at an intermediate pressure stage or at the exit, guided as cooling air through the components which are to be cooled, and then fed again at a suitable lower pressure stage into the compressor. The recirculated cooling air in this case can also be additionally cooled in a cooler before being fed into the compressor.

The above known type of closed cooling circuit has significant advantages in terms of simplicity of design and operation and influence on the overall efficiency when compared to the types of open circuit cooling described previously. The disadvantage is, however, that in the case of a re-cooling of the cooling air, external cooling media are used to cool down the returned cooling air in a heat exchanger. The heat removed in the heat exchanger in this way is removed in an efficiency-reducing manner from the process of the gas turbine system. In view of this, U.S. Pat. No. 6,532,744B1 made a further improvement of the closed cooling method, in which process compressed air is removed from the compressor and is fed as cooling air for cooling inside an internal cooling channel through thermally loaded components of the combustor and/or the turbine, is then re-cooled, compressed, and finally added to the compressor end air, wherein at least part of the compressor end air is used for re-cooling the cooling air. With this cooling method, the efficiency of the gas turbine system is further improved.

However, in the sequential cooling process of this closed cooling method, the cooling air after going through the upstream cooled component will directly go to the downstream cooled component for the subsequent cooling. This may lead to the result that the downstream component could not be effectively cooled by the cooling air therethrough, which was already heated in the upstream component.

### Summary of the Invention

It is therefore an object of the present invention to provide a method and a gas turbine system for sequential cooling of the gas turbine components to solve the above technical problems, so as to further improve the cooling efficiency in the gas turbine.

According to one embodiment of the present invention, a sequential cooling method for a gas turbine system is provided, wherein the gas turbine system comprises a compressor for compressing air, a combustor in which a fuel is burned with the compressed air from the compressor to form hot gas, a turbine comprising a plurality of stages having a first stage and a second stage, the method comprises steps of:
cooling the first stage of the turbine through a cooling air flow, whereby a first discharged air is formed; re-cooling the first discharged air flow, whereby a first re-cooled air flow is formed; cooling the second stage of the turbine through the first re-cooled air flow, whereby a second discharged air flow is formed.

According to another one embodiment of the present invention, a gas turbine system for performing sequential cooling is provided, comprising a compressor for compressing air, a combustor in which a fuel is burned with the compressed air from the compressor to form hot gas, a turbine comprising a plurality of stages having a first stage and a second stage, wherein the first stage of the turbine is cooled through a cooling air flow to form a first discharged air, wherein the first discharged air flow is re-cooled to form a first re-cooled air flow, wherein the second stage of the turbine is cooled through the first re-cooled air flow to form a second discharged air flow.

Other possible embodiment of the present invention corresponds to the dependent claims.

### Brief Description of the Drawings

The objects, advantages and other features of the present invention will become more apparent upon reading of the following non-restrictive description of preferred embodiments thereof, given for the purpose of exemplification only, with reference to the accompany drawing, through which similar reference numerals may be used to refer to similar elements, and in which:
- Fig. 1: is a simplified schematic diagram of a gas turbine system according to a first embodiment of the invention;
- Fig. 2: is a simplified schematic diagram of a gas turbine system according to a second embodiment of the invention;
- Fig. 3: is a simplified schematic diagram of a gas turbine system according to a third embodiment of the invention.
- Fig. 4: is a simplified schematic diagram of a gas turbine system according to a fourth embodiment of the invention.

### Detailed Description of Different Embodiments of the Invention

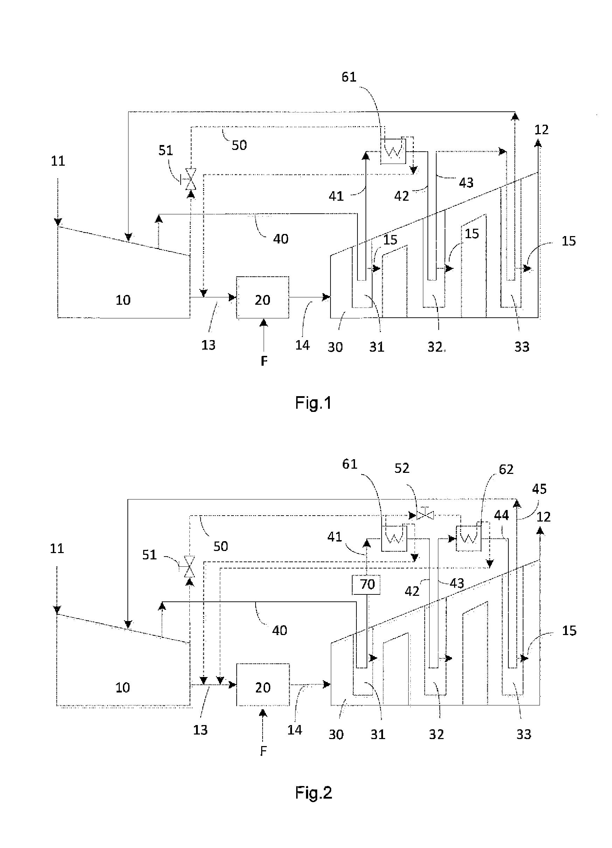

FIG. 1 shows a simplified schematic diagram of a gas turbine system according to a first embodiment of the invention with a cooling circuit. The gas turbine system comprises a compressor 10, a combustor 20, and a (usually multi-stage) turbine 30. The compressor 10 and turbine 30 are provided with corresponding rows of blades and vanes. The compressor 10 takes in suction air 11 on the inlet side, compresses it, and outputs it on the outlet side in the form of compressor end air 13 to the combustor 20, where it is used as combustion air for burning a (liquid or gaseous) fuel F. The hot gas 14 created during combustion is expanded in the downstream turbine 30 while providing work output, and is then passed on in the form of waste gas 12 to a chimney or in a combination power plant to downstream waste heat steam generator.

Inside the turbine 30 are provided various rows of turbine stages such as vanes and rotating blades that are exposed to the hot gas 14 coming from the combustor 20, whereby the closer the vanes and blades are located relative to the inlet of the turbine 30, the greater the thermal load on said vanes and blades. Given the high hot gas temperatures required for good efficiency, these thermally severely loaded components must be cooled in order to achieve a sufficient life span.

According to the first embodiment, a cooling air flow 40 from the compressor 10 at a predetermined pressure level travels through a first stage 31 of the turbine 30 (such as a vane in this embodiment) whereby a first discharged air 41 is formed and heated by the first stage 31 under high temperature. The first discharged air 41 taking the heat of the first stage 31 travels through a first cooler 61 for heat exchange, whereby a first re-cooled air 42 is formed. This first re-cooled air 42 is then fed into a second stage 32 of the turbine to absorb the heat therein so as to effectively cool the second stage 32, whereby a second discharged air 43 is formed. The second discharged air 43 further goes through the following downstream components of the turbine such as the vane 33 or other vanes or blades which are not shown in Fig. 1 to cool these thermally loaded components. Then this cooling air flow with the heat is further cooled and returns back to the compressor 10 to form a closed cooling loop as known in the prior art.

For most situations in practice, the cooling loop is not completely closed if an additional external cooling, in the form of a film cooling or trailing edge cooling, is provided or if intentional or unintentional leakages do occur. For this purpose, for example, outflow openings (drilled film cooling openings) are provided on the component to be cooled, through which openings a part of the circulating cooling air flows outside to the turbine main flow in the form of leakage air 15 and forms a cooling film on the external surface of the component. Thus the mass flow of the sequential cooling air decreases after each stage. However, the content of leakage air 15 is hereby selected so that on the one hand the overall efficiency of the system is only slightly reduced, while on the other hand an effective film cooling is achieved.

In the first embodiment, the first cooler 61 is a heat exchanger, through which at least part of the compressor air 50 flows as shown in dotted line in Fig. 1. The air flow 50 from the compressor 10 travels through the first cooler 61 to take the heat of the first discharged air 41, then returns and joins the compressor end air 13. Further, the portion of compressor air 50 that is supposed to absorb heat in the first cooler 61 can be adjusted with a control valve 51. The valve 51 acts as a throttle device to control the flow passing through the first cooler 61, thus the heat exchanged with the first discharged air 41 can be adjusted. As a result, the temperature of the whole cooling air flow can be adjusted to a predetermined temperature to ensure that in all operation modes of the turbine the cooling air flow is able to keep a consistent cooling effect on the thermally loaded components to ensure the target lifetime of the components. In this embodiment, the first cooler 61 is implemented in the form of a heat exchanger using a portion of compressor air. Alternatively, other forms of the first cooler may also implement the cooling effect, which will be described later.

As mentioned above, the closer the turbine components are located relative to the inlet of the turbine 30, the greater the thermal load on said components. Therefore, it is a first priority to dispose the first cooler 61 in the cooling air flow between the first stage 31 and second stage 32 of the turbine 30. Otherwise, the cooling air upon going through the first stage 31 will rise up to a relatively higher temperature due to the heavy thermal load on the stage 31, thus the cooling effect on the following turbine components will be significantly reduced. In the first embodiment, only the first cooler 61 is disposed to implement the re-cooling of the cooling air. However, depending on the actual need, it is also possible to arrange more coolers in the downstream of the first cooler between any two adjacent stages of the turbines as long as it is able to efficiently improve the cooling effect.

Fig. 2 shows a simplified schematic diagram of a gas turbine system according to a second embodiment of the invention, wherein two coolers are arranged. The sequential cooling system therein is similar to that in Fig. 1. The difference is that a second cooler 62 is further disposed in the cooling air flow between the second stage 32 and third stage 33 of the turbine 30. The second discharged air flow 43 is re-cooled by the second cooler 62, whereby a second re-cooled air flow 44 is formed. This second re-cooled air flow 44 flows through and cools the third stage 33 of the turbine, whereby a third discharged air flow 45 is formed, which then returns to the compressor 10. The compressor air 50 forms a branch through the second cooler 62 for heat exchange. The control valve 52 is arranged to adjust the compressor air flow through the second cooler 62. In addition, if needed, a cooling air turbine 70 can be arranged on the upstream of the first cooler 61. The cooling air turbine 70 can work like a valve so as to adjust the cooling air pressure to a predetermined pressure level corresponding to the different level of load in operation. Meanwhile, it is able to reduce the total temperature of the cooling air passing therethrough as well. Although not shown in the Fig 2, this cooling air turbine 70 can be mechanically connected to the compressor 10 to provide additional work output, so as to reduce the required motor power for the compressor 10.

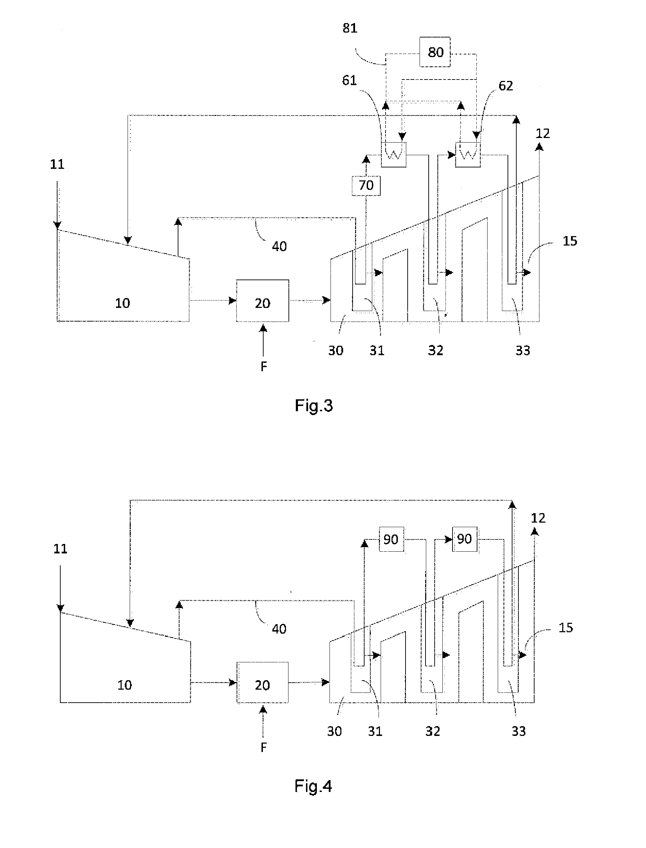

In the first and second embodiment, the heat picked up by the first cooler 61 and second cooler 62 is taken to the compressor end air 13 to feed into the combustor 20, which leads to an increased efficiency of the whole gas turbine. In the third embodiment, a different cooling scheme is adopted, i.e., the heat picked up by the first cooler 61 and second cooler 62 is re-injected into a separate water steam cycle 80 rather than taken back to the combustor 20. As shown in Fig. 3, the heat picked up by the first cooler 61 and second cooler 62 is taken away through the steam flow 81, absorbed and then the cooled steam flow is returned to the coolers 61 and 62, so as to form a closed cooling loop. The water steam cycle 80 can be a system comprising a heat recovery steam boiler with a steam turbine as known in the art. Further, although not shown in Fig. 3, it is also possible to arrange control valves in the water steam cycle so as to adjust the temperature of the cooling air to a pre-determined arrange. Also, similar to the second embodiment, a cooling air turbine 70 or an adjustable valve can be arranged on the upstream of the first cooler 61 to adjust the cooling air pressure to a predetermined pressure level.

In the above embodiments, the first and second coolers are implemented in the form of a heat exchanger, wherein the heat is taken by either a compressor air cycle or a water steam cycle. Alternatively, instead of the heat exchanger, it is also possible to dispose a water/steam spray device or a quench cooler in the cooling air flow between the adjacent stages of the turbine. This fourth embodiment is shown in Fig. 4, wherein the coolers 61 and 62 are implemented in the form of a water (or steam) spray device 90 or a quench cooler. The cooling air through the first and second cooler is directly re-cooled by the spray of water or steam. This embodiment implements a simpler configuration of the re-cooling system.

Alternatively, the coolers 61 and 62 can also be implemented by the cooling air turbine 70. As mentioned previously, the cooling air turbine 70 can work like a valve to adjust the cooling air pressure, and in the meantime it is able to reduce the total temperature of the cooling air passing through as well. Therefore, depending on the actual need, it is possible to just adopt the cooling air turbine 70 as the coolers for air re-cooling. This embodiment implements a simpler cooling system, while the cooling air turbine 70 can be mechanically connected to the compressor 10 to provide additional work output to the compressor 10.

In all above embodiments, the cooling air, after cooling the each stage of the thermally loaded components, returns to the compressor to form a closed loop. However, it is also possible to have the cooling air discharge directly into the hot gas mass flow after the last cooled component rather than returning to the compressor. Further, although it is preferred to obtain the cooling air from the compressor 10, it is also possible to adopt an external and separate cooling medium source to provide cooling air to achieve the present invention.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

### List of Reference Numerals

- 10: compressor
- 11: suction air
- 12: waste gas
- 13: compressor end air
- 14: hot gas
- 15: leakage air
- 20: combustor
- 30: turbine
- 31: first stage
- 32: second stage
- 33: third stage
- 40: cooling air flow
- 41: first discharged air
- 42: first re-cooled air
- 43: second discharged air
- 44: second re-cooled air
- 45: third discharged air
- 50: compressor air flow
- 51, 52: control valve
- 61: first cooler
- 62: second cooler
- 70: cooling air turbine
- 80: water steam cycle
- 81: steam flow
- 90: water spray device

## Claims

1. A sequential cooling method for a gas turbine system, wherein the gas turbine system comprises a compressor (10) for compressing air, a combustor (20) in which a fuel is burned with the compressed air from the compressor to form hot gas, a turbine (30) comprising a plurality of stages having a first stage (31) and a second stage (32), the method comprises steps of:
cooling the first stage (31) of the turbine through a cooling air flow (40), whereby a first discharged air (41) is formed;
re-cooling the first discharged air flow (41), whereby a first re-cooled air flow (42) is formed;
cooling the second stage (32) of the turbine through the first re-cooled air flow (42), whereby a second discharged air flow (43) is formed.

2. The method of claim 1, **characterized in that**, the plurality of stages comprises a third stage (33), the method further comprises steps of:
re-cooling the second discharged air flow (43), whereby a second re-cooled air flow (44) is formed;
cooling the third stage (33) of the turbine through the second re-cooled air flow (44), whereby a third discharged air flow (45) is formed.

3. The method of any of claim 1 to 2, **characterized in that**, the cooling air flow (40) is supplied from the compressor (10) of the gas turbine system, or from an external cooling medium source.

4. The method of any of claim 1 to 3, **characterized in that**, the re-cooling is performed through air coolers (61, 62).

5. The method of claim 4, **characterized in that**, the air coolers (61, 62) take the heat from the cooling air flow by the cycle of a compressor air flow (50).

6. The method of claim 4, **characterized in that**, the air coolers (61, 62) take the heat from the cooling air flow by a water-steam cycle (80).

7. The method of claim 5 or 6, **characterized in that**, the re-cooling comprises step of: adjust the temperature of the re-cooled air flow to a predetermined temperature range by control valves (51, 52).

8. The method of claim 4, **characterized in that**, the air coolers comprise a cooling air turbine (70) to take the heat from the cooling air flow.

9. The method of claim 4, **characterized in that**, the air coolers comprise a water spray device or a quench cooler (90) to take the heat from the cooling air flow.

10. The method of any of claim 1 to 9, **characterized in that**, the method further comprises before the step of re-cooling, steps of : adjust the first discharged air flow (41) to a predetermined pressure level by a cooling air turbine (70) or a valve.

11. A gas turbine system for performing sequential cooling, comprising a compressor (10) for compressing air, a combustor (20) in which a fuel is burned with the compressed air from the compressor to form hot gas, a turbine (30) comprising a plurality of stages having a first stage (31) and a second stage (32), wherein the first stage (31) of the turbine is cooled through a cooling air flow (40) to form a first discharged air (41), wherein the first discharged air flow (41) is re-cooled to form a first re-cooled air flow (42), wherein the second stage (32) of the turbine is cooled through the first re-cooled air flow (42) to form a second discharged air flow (43).

12. The gas turbine system of claim 11, **characterized in that**, the cooling air flow (40) is supplied from the compressor (10) of the gas turbine system, or from an external cooling medium source.

13. The gas turbine system of claim 11 or 12, **characterized in that**, the re-cooling is performed through air coolers (61, 62).

14. The gas turbine system of claim 13, **characterized in that**, the air coolers (61, 62) take the heat from the cooling air flow by the cycle of a compressor air flow (50) or by a water-steam cycle (80).

15. The gas turbine system of claim 13, **characterized in that**, the air coolers comprise a cooling air turbine (70) to take the heat from the cooling air flow (40).
